# EUROPÄISCHE PATENTANMELDUNG

(11) **EP 1 648 157 A1**
(43) Veröffentlichungstag der Anmeldung: **19.04.2006**
(21) Anmeldenummer: 04024331.3
(22) Anmeldetag: 13.10.2004
(51) Int. Cl.: H04N 1/60

(54) **Verfahren zur Druckoptimierung beim Mehrfarbdruck**

(71) Anmelder: GMG GmbH & Co. KG, 72072 Tübingen (DE)
(72) Erfinder: Weihing, Jörg, 72072 Tübingen (DE); Weihing, Robert, 72072 Tübingen (DE)
(74) Vertreter: Stenger, Watzke & Ring

(57) **Zusammenfassung**

Die Erfindung betrifft ein Verfahren zur Druckoptimierung beim Mehrfarbdruck, bei welchem ein Testdruck erstellt und vermessen wird. Die Farbtöne des Testdrucks werden mit einer als Datensatz vorliegenden Referenztabelle verglichen, in welcher jedem Farbton druckmaschinenspezifische Farbwertkombinationen zugeordnet sind. Zu jedem Farbton wird die wirtschaftlich günstigste Farbwertkombination ermittelt und unter Verwendung dieser Farbwertkombination ein weiterer Testdruck ausgedruckt. Das erfindungsgemäße Verfahren kann iterativ durchgeführt werden.

## Beschreibung

Die Erfindung betrifft ein Verfahren zur Druckoptimierung beim Mehrfarbdruck. Beim Mehrfarbdruck wird von einer zu druckenden Vorlage ein Datensatz erstellt. Die jeweiligen Farbtöne der Vorlage werden durch Abdrucken einer Kombination mehrerer Grundfarben hergestellt.

Aus dem Stand der Technik sind verschiedene Verfahren zum Mehrfarbdruck bekannt. So wird beispielsweise beim Vierfarbdruck nach dem sogenannten "CMYK-Farbmodell" unter Verwendung der Farben Cyan (C), Magenta (M), Gelb (Y) und Schwarz (K) eine Vorlage ausgedruckt. Durch die subtraktive Überlagerung der oben genannten vier Grundfarben werden die entsprechenden Farbtöne in der ausgedruckten Vorlage anhand des reflektierten Lichtes erzeugt. Die vier Grundfarben werden anteilig in Prozentwerten von jeweils 0 bis 100% der entsprechenden Druckfarbe zugefügt. Die anteiligen Prozentwerte der Grundfarben werden als Farbwerte bezeichnet. Werden die Farbwerte aller Grundfarben auf Null gesetzt, so ergibt sich beim Druck daraus ein reines Weiß, werden alle Farbwerte der Grundfarben auf 100 gesetzt, so resultiert daraus die Farbe Schwarz. Durch die Kombination der Farbwerte von 0 bis 100 der vier Grundfarben ergeben sich demnach 101⁴ (104.060.401) Möglichkeiten, die Grundfarben auf verschiedene Weise miteinander zu kombinieren, vorausgesetzt, daß die Farbwerte jeweils als ganzzahlige Prozentzahlen vorliegen.

Es besteht nun die Möglichkeit, einen bestimmten Farbton beim Druck auf einer bestimmten Druckmaschine durch mehrere voneinander verschiedene Farbwertzusammenstellungen der Grundfarben zu erhalten. So ist es beispielsweise möglich, die Farbe Schwarz, wie oben bereits erwähnt, dadurch zu erhalten, daß die Anteile der vier Grundfarben auf jeweils 100 gesetzt werden, ebenso gut ist die Farbe Schwarz jedoch zu erhalten, indem die Farbwerte der Farben Zyan, Magenta und Gelb auf 0 und der Farbwert der Farbe Schwarz auf 100 gesetzt wird. Für die für einen zu druckenden Farbton existierenden unterschiedlichen Farbwertkombinationen der Grundfarben ergeben sich unterschiedlich hohe Farbverbräuche. Ebenso ist es möglich, daß die Grundfarben unterschiedliche Kosten verursachen, daß beispielsweise die Farbe Gelb höhere Kosten verursacht als die Farbe Magenta und aus diesem Grund Farbwertkombinationen mit möglichst wenig Gelb wirtschaftlich zu bevorzugen sind.

Derzeit werden bei Druckverfahren nach dem Stand der Technik die Farbwertzusammenstellungen willkürlich ermittelt. Dabei kommt es häufig vor, daß nicht mit der Farbwertkombination gedruckt wird, mit der am wenigsten Farbe verbraucht wird, wodurch der Verbrauch unnötig gesteigert wird und zusätzliche Kosten verursacht werden. Daher existiert der Bedarf den Druckfarbenverbrauch zu vermindern sowie die für eine bestimmte Druckfarbe benötigte Farbwertkombination der Grundfarben unter wirtschaftlichen Gesichtspunkten optimiert auszuwählen.

Ausgehend von den Nachteilen des beschriebenen Standes der Technik hat die vorliegende Erfindung daher die Aufgabe, ein Verfahren zur Druckoptimierung beim Mehrfarbdruck zu schaffen, wodurch eine Einsparung von Druckfarbe ermöglicht wird. Des weiteren soll die Wirtschaftlichkeit beim Mehrfarbdruck verbessert werden, indem die Farbwertzusammenstellungen der Grundfarben unter wirtschaftlichen Gesichtspunkten optimiert ausgewählt werden.

Die Aufgabe wird erfindungsgemäß durch ein Verfahren zur Druckoptimierung beim Mehrfarbdruck gelöst, wobei eine Referenzfarbskala erstellt wird, in welcher mögliche Farbwertkombinationen der Grundfarben den im Druck erscheinenden Farbtönen zugeordnet werden. Nachfolgend weist das erfindungsgemäße Verfahren die folgenden Verfahrensschritte auf:
a) Ausdrucken eines Testdruckes der Vorlage,
b) Vermessen der Farbtöne des Testdruckes,
c) Vergleich der gemessenen Farbtöne aus Schritt b) mit den Farbtönen der Referenzfarbskala,
d) Auswahl der für jeden Farbton wirtschaftlich günstigsten Farbwertkombination aus der Referenzfarbskala,
e) Ausdruck der Vorlage als Testdruck unter Verwendung der im Schritt d) ausgewählten Farbwertkombinationen.

Die in dem Verfahren erstellte Referenzfarbskala ist für die jeweilige beim Drucken verwendete Druckmaschine/Maschinentyp spezifisch. Die Referenzfarbskala kann beispielsweise dadurch erstellt werden, indem Farbspektren ausgedruckt werden und die für jeden Farbton der Farbspektren verwendeten Farbwertkombinationen der Grundfarben ermittelt werden. Die zu jedem Farbton gehörenden Farbwertkombinationen werden tabellarisch festgehalten. In der Referenzfarbskala werden somit sämtliche für einen Druckfarbton möglichen Farbwertkombinationen der Grundfarben festgehalten. Durch das nachfolgende Durchführen der Verfahrensschritte a) bis e) wird somit ermöglicht, vor Anlaufen des eigentlichen Druckvorgangs die für jeden Farbton wirtschaftlich günstigste Farbwertkombination auszuwählen und den eigentlichen Druck der Vorlage mittels dieser optimierten Farbwertkombinationen mit einem geringeren Verbrauch an Druckfarben durchzuführen. Dadurch werden vorteilhaft die durch den Druckfarbenverbrauch erzeugten Kosten beim Drucken minimiert. Dadurch, daß insgesamt weniger Druckfarbe für einen bestimmten Druckauftrag verbraucht wird, bietet das erfindungsgemäße Verfahren vorteilhaft ebenfalls die Möglichkeit derartige Druckverfahren unter Gesichtspunkten des Umweltschutzes zu optimieren. Des weiteren ist festzustellen, daß mit dem erfindungsgemäßen Verfahren optimierte Druckvorgänge wesentlich stabiler laufen und eine geringere Fehleranfälligkeit zeigen.

Gemäß einer zweiten Ausführungsform der Erfindung werden die Verfahrensschritte b) bis e) iterativ durchgeführt, indem die in Schritt e) ausgedruckte Vorlage in Schritt b) vermessen wird. Auf diese Weise wird vorteilhaft ermöglicht, daß Fehler oder Unzulänglichkeiten des ausgedruckten Testdrucks, wie beispielsweise eine nicht zufriedenstellende Mattigkeit oder Farbaufnahme, mit optimierten Farbwertkombinationen korrigiert werden können. Auf diese Weise wird nicht nur ein unter wirtschaftlichen Gesichtspunkten kostengünstiges und umweltfreundliches Drucken der Vorlage, sondern ebenfalls ein unter dem Gesichtspunkt der Druckqualität optimiertes Drucken ermöglicht. Die iterative Wiederholung der Verfahrensschritte b) bis e) kann beliebig oft durchgeführt werden, bis der ausgedruckte Testdruck den gestellten Anforderungen entspricht. Es hat sich jedoch als vorteilhaft erwiesen, die Verfahrensschritte b) bis e) zwei Mal iterativ zu durchlaufen.

Gemäß einer weiteren vorteilhaften Ausführungsform der Erfindung werden die Referenzfarbskala und die Farbtöne des Testdrucks als Datensätze in einer Rechnereinheit gespeichert. Diese Rechnereinheit kann beispielsweise die Steuerungsrechnereinheit der Druckmaschine oder eine von der Druckmaschine unabhängig aufgestellte Rechnereinheit, wie beispielsweise ein PC oder ein PC-Netzwerk sein. Die Rechnereinheit kann des weiteren mit der Maschinensteuerung verbunden sein, so daß ein einfacher und schneller Datenaustausch zwischen Rechnereinheit und Maschinensteuerung gewährleistet ist. Die Farbskala und die Farbtöne des Testdrucks werden als Zuordnungstabelle in der jeweiligen Rechnereinheit gespeichert.

Gemäß einer weiteren vorteilhaften Ausführungsform der Erfindung ist vorgesehen, daß der Ausdruck der Vorlage als Testdruck in Schritt e) auf einer Ausgabeeinheit für eine Rechnereinheit erfolgt. Die Ausgabeeinheit für die Rechnereinheit kann dabei beispielsweise durch einen handelsüblichen Farbtintenstrahldrucker oder Farblaserdrucker realisiert sein. Der Testdruck der Vorlage wird auf dem Drucker der Rechnereinheit kostengünstig und wenig zeit- und arbeitsaufwendig simuliert. Auf diese Weise wird vorteilhaft erreicht, daß eine in die Produktion eingebundene Druckmaschine für die Erstellung von Druckaufträgen zur Verfügung steht und nicht aus der Produktion genommen werden muß, um die Druckeinstellungen für einen zukünftigen Druckauftrag zu optimieren. Vorteilhaft ist dadurch eine vorhandene Druckmaschine wirtschaftlicher einsetzbar. Für die Durchführung des Verfahrens zur Druckoptimierung ist eine heutzutage normalerweise in jedem Betrieb der Druckindustrie vorhandene Rechnereinheit, wie beispielsweise ein handelsüblicher PC mit Farbtintenstrahldrucker verwendbar. Der Einsatz einer solchen Rechnereinheit ist nicht auf das Verfahren zur Druckoptimierung beschränkt, vielmehr kann eine derartige Rechnereinheit weiterhin auch für zahlreiche bekannte Aufgaben genutzt werden und verursacht daher keine zusätzlichen Kosten.

Im folgenden wird das erfindungsgemäße Verfahren anhand eines nicht beschränkenden Ausführungsbeispiels zum besseren Verständnis beschrieben. Dabei zeigt:

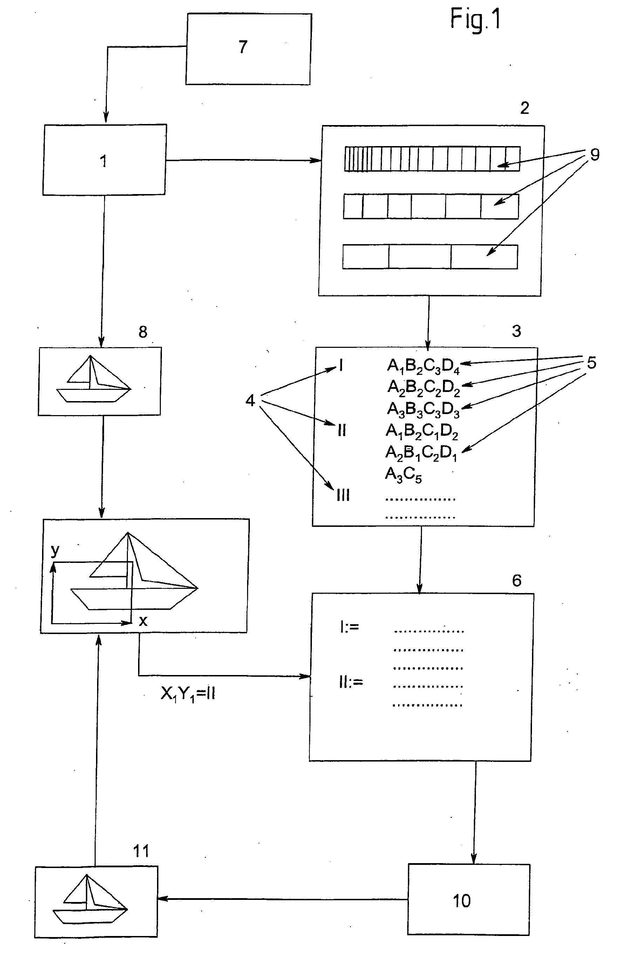

- Fig. 1: eine schematische Darstellung des erfindungsgemäßen Verfahrens,
- Fig. 2: eine Gegenüberstellung von Farbzusammenstellungen von Drucken nach einem herkömmlichen und dem erfindungsgemäßen Verfahren in Farbe und
- Fig.3: eine Gegenüberstellung der Farbzusammenstellungen aus Fig. 2 in Schwarz/Weiß.

Von einer Druckmaschine 1 beliebiger Art wird zunächst eine Referenzfarbskala 2 erstellt. Die Referenzfarbskala 2 ist im wesentlichen ein Ausdruck verschiedener Farbspektren 9. Den Farbspektren 9 ist zu entnehmen, mit welchen Farbwertkombinationen 5 in der Druckmaschine verschiedene Farbtöne 4 dargestellt werden. Die für jeden Farbton 4 möglichen Farbwertkombinationen 5 werden als Datensatz 3 beispielsweise in Form einer Zuordnungstabelle in einer Rechnereinheit 6 gespeichert.

Nachdem der für die jeweilige Druckmaschine spezifische Datensatz 3 in der Rechnereinheit 6 gespeichert worden ist, wird mit der Druckmaschine 1 ein Testdruck 8 einer als Datensatz vorliegenden Vorlage 7 ausgedruckt (Verfahrensschritt a)). In einem Verfahrensschritt b) wird der Testdruck 8 vermessen. Bei dieser Vermessung wird von jedem Punkt des Testdrucks 8 mit den Koordinaten X und Y der jeweilige Farbton 4 vermessen. In dem vorliegenden Beispiel wird für den vermessenen Punkt mit den Koordinaten X₁ und Y₁ der Farbton 11 ermittelt. In der Rechnereinheit 6 werden im Verfahrensschritt c) sämtliche Farbtöne 4 des Testdrucks 8 mit den Farbtönen der als Datensatz 3 vorliegenden Referenzfarbskala 2 verglichen. Anschließend wird in einem Verfahrensschritt d) die für jeden Farbton 4 wirtschaftlich günstigste Farbwertkombination 5 aus dem Datensatz 3 der Referenzfarbskala 2 ermittelt. Mittels eines herkömmlichen Farbtintenstrahldruckers 10 wird dann ein weiterer Testdruck 11 in einem Verfahrensschritt e) anhand der Datensatzvorlage 7 ausgedruckt.

Die Verfahrensschritte b) bis e) werden dann in einem weiteren iterativen Schritt wiederholt durchgeführt. Das bedeutet, daß der Testdruck 11 in einem Verfahrensschritt b) zunächst erneut vermessen wird. Vom Testdruck 11 werden sämtliche Punkte mit den Koordinaten X, Y vermessen, die gemessenen Farbtöne mit den Farbtönen der Referenzfarbskala verglichen und die wirtschaftlich günstigste Farbwertkombination ausgewählt. Durch die Durchführung weiterer iterativer Durchläufe des erfindungsgemäßen Verfahrens besteht die Möglichkeit Mängel des Testdrucks 11, beispielsweise bezüglich unterschiedlicher Mattigkeit oder unterschiedlicher Farbannahme auszubessern. Dazu kann beispielsweise vorgesehen sein, bei Vorliegen derartiger Mängel bestimmte Farbtöne manuell in der Datensatzvorlage 7 abzuändern, so daß das erzielte Druckergebnis den gewünschten Vorstellungen entspricht.

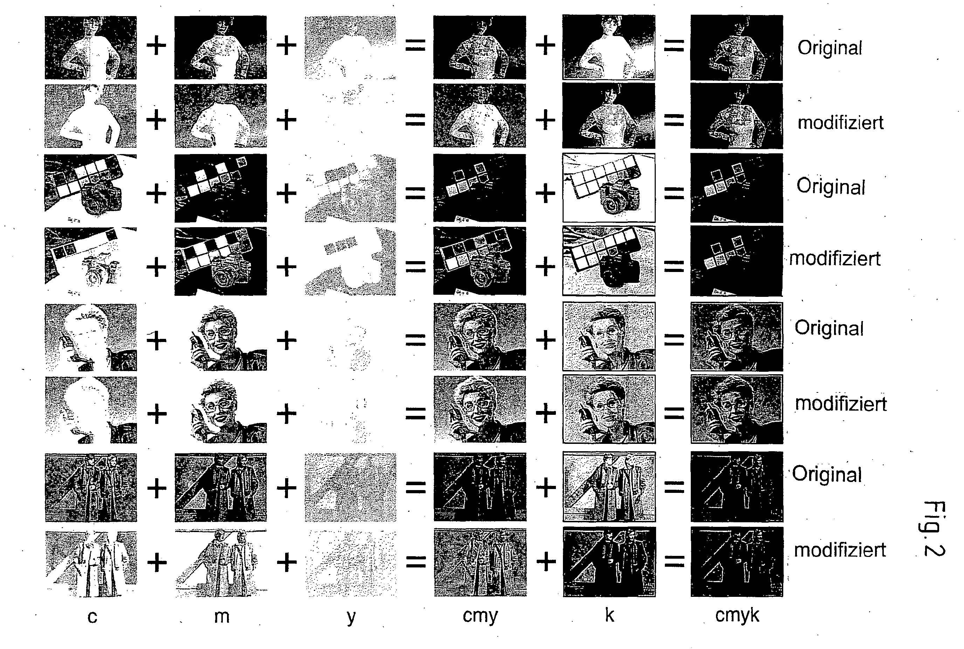

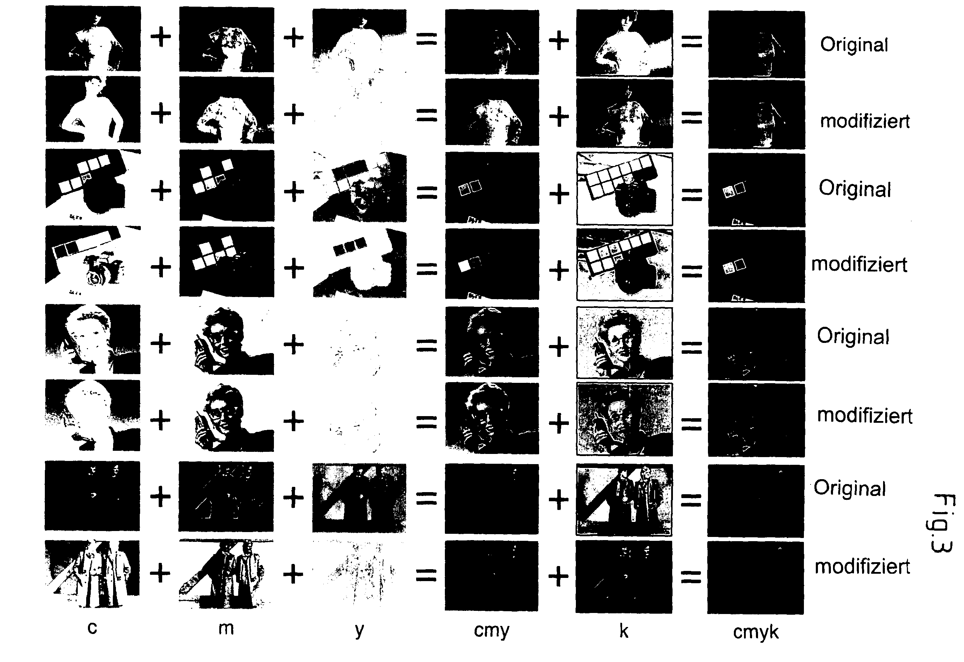

Fig. 2 und Fig. 3 zeigen jeweils vier Beispiele von Testdrucken. Fig. 2 zeigt diese Beispiele in farblicher Darstellung, Fig. 3 zeigt die Beispiele aus Fig. 2 entsprechend in einer Schwarz/Weiß-Kopie. Jeder Testdruck der vier Beispiele wurde einmal mit einem herkömmlichen Druckverfahren ohne Druckoptimierung gedruckt. Dieser Druck ist mit "Original" bezeichnet und in der jeweils oberen Reihe jedes Beispiels wiedergegeben. Darüber hinaus wurde jeder Druck mit dem erfindungsgemäßen optimierten Verfahren gedruckt und in der jeweils zweiten Zeile jedes Beispiels als "modifizierter" Druck dargestellt.

In den ersten drei Spalten sind die bei jedem Testdruck verwendeten Grundfarben Cyan (C), Magenta (M) und Gelb (Y) einzeln dargestellt. In der vierten Spalte ist die Überlagerung dieser drei Grundfarben dargestellt und mit CMY gekennzeichnet. Vergleicht man die Abdrucke der drei Grundfarben (C, M, Y) sowie der Mischung der drei Grundfarben (CMY) der Drucke des nicht optimierten Verfahrens mit denen des optimierten Verfahrens, so erkennt man, daß beim optimierten Verfahren die Einzeldrucke der drei Grundfarben weitaus blasser wirken als die nach dem nicht optimierten Verfahren. Gleiches gilt für die Abbildungen der Mischfarben (CMY). Dieses ist dadurch bedingt, daß die drei Grundfarben beim erfindungsgemäßen Verfahren optimiert und daher dünner gedruckt werden als bei herkömmlichen Verfahren.

Zu den Farbmischungen der drei Grundfarben Cyan (C), Magenta (M) und Gelb (Y) wird als vierte Komponente sowohl beim nicht optimierten Verfahren als auch beim optimierten Verfahren die Farbe Schwarz (K) in Grauabstufungen hinzugefügt. Der Einzeldruck der jeweiligen Abbildungen in Schwarz (K) ist in den Fign. 2 und 3 in der fünften Spalte dargestellt. Betrachtet man die Abbildungen dieses Farbauftrages, erkennt man beim Vergleich, daß die Abbildungen des optimierten Verfahrens eine wesentlich intensivere Einfärbung zeigen als die des nicht optimierten Verfahrens.

Durch Überlagerung der Abbildungen in den jeweiligen Grundfarben Cyan (C), Magenta (M) und Gelb (Y) mit den Abbildungen in Schwarz (S) erhält man schließlich mittels beider Verfahren die in der rechten Spalte der Fign. 2 und 3 dargestellten gewünschten Abbildungen des fertigen Druckes. Beim Vergleich der mit beiden Verfahren erstellten Drucke der einzelnen Beispiele lassen sich keine Unterschiede erkennen.

### Bezugszeichenliste

- 1: Druckmaschine
- 2: Referenzfarbskala
- 3: Datensatztabelle
- 4: Farbton
- 5: Farbwertkombination
- 6: Rechnereinheit
- 7: Datensatzvorlage
- 8: Testdruck
- 9: Farbspektrum
- 10: Farbtintenstrahldrucker
- 11: Testdruck

## Patentansprüche

1. Verfahren zur Druckoptimierung beim Mehrfarbdruck, wobei beim Mehrfarbdruck von einer zu druckenden Vorlage ein Datensatz erstellt wird und die jeweiligen Farbtöne der Vorlage durch Abdrucken einer Kombination mehrerer Grundfarben hergestellt werden,
**gekennzeichnet durch**
die Erstellung einer Referenzfarbskala, in welcher mögliche Farbwertkombinationen der Grundfarben den im Druck erscheinenden Farbtönen zugeordnet werden,
sowie die Verfahrensschritte:
a) Ausdrucken eines Testdruckes der Vorlage,
b) Vermessen der Farbtöne des Testdruckes,
c) Vergleich der gemessenen Farbtöne aus Schritt b) mit den Farbtönen der Referenzfarbskala,
d) Auswahl der für jeden Farbton wirtschaftlich günstigsten Farbwertkombination aus der Referenzfarbskala,
e) Ausdrucken der Vorlage als Testdruck unter Verwendung der im Schritt d) ausgewählten Farbwertkombinationen.

2. Verfahren nach Anspruch 1, **dadurch gekennzeichnet, daß** die Verfahrensschritte b) bis e) iterativ durchgeführt werden, indem die in Schritt e) ausgedruckte Vorlage in Schritt b) vermessen wird.

3. Verfahren nach einem der Ansprüche 1 oder 2, **dadurch gekennzeichnet, daß** die Referenzfarbskala und die Farbtöne des Testdruckes als Datensätze in einer Rechnereinheit gespeichert werden.

4. Verfahren nach einem der Ansprüche 1 bis 3, **dadurch gekennzeichnet, daß** die Referenzfarbskala spezifisch für eine jeweilige Druckmaschine erstellt wird.

5. Verfahren nach einem der vorstehenden Ansprüche, **dadurch gekennzeichnet, daß** der Ausdruck der Vorlage als Testdruck in Schritt e) auf einer Ausgabeeinheit für eine Rechnereinheit erfolgt.

6. Verfahren nach einem der vorstehenden Ansprüche, **dadurch gekennzeichnet, daß** die Verfahrensschritte b) bis e) zweimal iterativ durchlaufen werden.
